# EUROPÄISCHE PATENTANMELDUNG

(11) **EP 1 406 066 A2**
(43) Veröffentlichungstag der Anmeldung: **07.04.2004**
(21) Anmeldenummer: 02029080.5
(22) Anmeldetag: 30.12.2002
(51) Int. Cl.: G01C 22/00, A63C 11/00, G01P 3/62

(54) **Wegstrecken- und Geschwindigkeitsmessvorrichtung für Skier und Snowboards**

(30) Priorität: 16.09.2002 DE 10243058
(71) Anmelder: Kramer, Tobias, 85622 Feldkirchen (DE)
(72) Erfinder: Kramer, Tobias, 85622 Feldkirchen (DE)
(74) Vertreter: Jehle, Volker Armin, Dipl.-Ing.

(57) **Zusammenfassung**

Die Erfindung betrifft eine Wegstrecken- und Geschwindigkeitsmessvorrichtung, insbesondere für skier und Snowboards, wobei die Wegstrecke durch die Messung von Gefälle sowie Höhendifferenz ermittelt wird, und wobei die Höhendifferenz durch einen elektronischen Luftdrucksensor gemessen wird.

## Beschreibung

Die Erfindung betrifft eine Messvorrichtung, insbesondere eine Messvorrichtung zum Messen von Wegstrecken bzw. Geschwindigkeiten eines Skifahrers oder Snowboarders.

Es ist bekannt Geschwindigkeiten eines Skifahrers oder Snowboarders bei Vorbeifahrt z.B. per Radar unter Ausnutzung des Doppler Effektes zu messen.

Der Erfindung liegt die Aufgabe zugrunde, eine neuartige Messvorrichtung, insbesondere zum Messen der Geschwindigkeit sowie der zurückgelegten Wegstrecke insbesondere eines Skifahrers oder Snowboarders zu messen und diese dem Skifahrer oder Snowboarder direkt anzuzeigen.

Die Erfindung löst die o.g. und weitere Aufgaben durch die Gegenstände der Ansprüche 1 und 10.

Vorteilhafte Weiterentwicklungen und Ausgestaltungen der Erfindung werden in den Unteransprüchen beschrieben.

Mit der Erfindung wird u.a. eine einfache Messung und Ausgabe bzw. Anzeige der gemessenen Geschwindigkeit bzw. Wegstrecke ermöglicht.

Besonders vorteilhaft wird gemäß der Erfindung eine Messvorrichtung bereitgestellt, welche ohne der Einsatz mechanischer, beweglicher Teile die Geschwindigkeit bzw. zurückgelegte Wegstrecke eines Skifahrers oder Snowboarders misst, indem Sensoren wie GPS- (global position system-) Sensoren eingesetzt werden, wobei die Geschwindigkeit bzw. die zurückgelegte Wegstrecke mittels Satelliten bzw. der Laufzeit der Funksignale zu diesen bzw. von diesen gemessen werden; oder optische Sensoren, wobei die Änderung der Struktur des Untergrundes mittels z.B. CCD Sensoren periodisch untersucht und miteinander verglichen wird (aus der Geschwindigkeit bzw. der Länge der Verschiebung kann dadurch eine Gesamtgeschwindigkeit bzw. gesamt zurückgelegte Wegstrecke berechnet werden); oder optische Sensoren, wobei der Untergrund mit einer stehenden Welle z.B. aus einer Laserlichtquelle bestrahlt wird und die Phasenverschiebung der Reflektion gemessen und daraus die Geschwindigkeit berechnet wird; oder ein (Prantl-) Staurohr, wobei der durch die Fahrt entstehende Staudruck gemessen wird.

Außerdem vorteilhaft wird die Geschwindigkeit bzw. zurückgelegte Wegstrecke durch die Kombination aus Gefälle des Hanges sowie der Höhendifferenz pro Zeit gemessen.

Außerdem vorteilhaft wird die Höhendifferenz durch einen hochempfindlichen Drucksensor gemessen, der eine Höhendifferenz von min 1 Meter messen kann. Dies entspricht einer Druckdifferenz von min 0,1 mbar.

Außerdem vorteilhaft wird das Gefälle des Hanges durch einen Winkelsensor gemessen.

Außerdem vorteilhaft basiert die Winkelmessung aus einem Beschleunigungssensor der sowohl statische Beschleunigung (z.B. Gravitation) wie auch dynamische Beschleunigung messen kann.

Außerdem vorteilhaft basiert der Beschleunigungssensor auf einem mechanischen Messverfahren, wobei die auf eine Masse wirkende Kraft gemessen wird. (z.B. analog devices ADXL202)

Außerdem vorteilhaft basiert der Beschleunigungssensor auf einem thermischen Messverfahren, wobei die Verschiebung einer erwärmten Gasblase durch Temperatursensoren innerhalb eines Gehäuses gemessen wird. (z.B. memsic MXD2020)

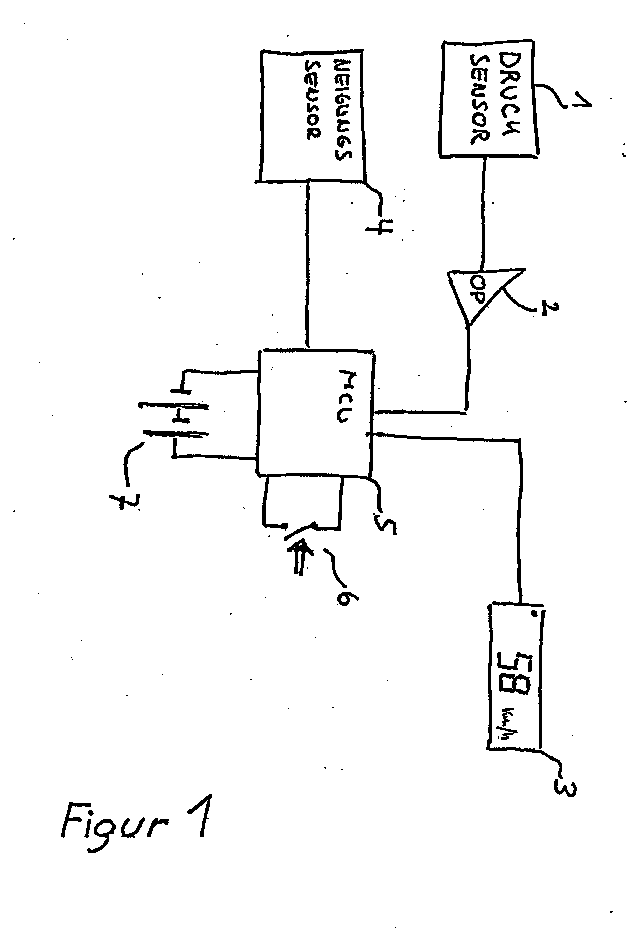

Außerdem vorteilhaft enthält die Vorrichtung schon mehrere vorabgespeicherte Beziehungen zwischen Winkel (Gefälle des Hanges) und Höhendifferenz. So beträgt z.B. die zurückgelegte Wegstrecke bei einem Gefälle des Hanges von 20° und einer gemessenen Höhendifferenz von einem Meter 2,9238 Meter (nach Sinus Funktion für 20° und 1m) bei einem Gefälle von 25° und einer Höhendifferenz von 1 Meter 2,3662 Meter. Legt der Skifahrer bei einem Gefälle von 20° z.B. 5 Höhenmeter in einer Sekunde zurück entspricht dies einem zurückgelegtem Weg von 14,619 Metern in einer Sekunde also einer Geschwindigkeit von 14,619 m/s also ca. 52,63 km/h. Um zu vermeiden, dass z.B. der zentrale Mikrocontroller bei jeder Messung eine komplizierte Sinus Rechnung ausführen muss ist es vorteilhaft eine Beziehungstabelle schon fest abzuspeichern. Diese Beziehungstabelle kann z.B. das in Figur 1 dargestellte Format haben.

Außerdem vorteilhaft ist es die Vorrichtung mittels einer Batterie, insbesondere mittels einer preisgünstigen Knopfzelle zu betreiben.

Außerdem vorteilhaft ist es die Vorrichtung so zu konstruieren, dass sie mittels nur eines Tasters/Knopfes bzw. Schalters zu bedienen ist. Er übernimmt dann sowohl die Funktion die Vorrichtung einzuschalten, den gewünschten Funktionsbereich einzustellen (z.B. Anzeige der Geschwindigkeit, Anzeigen der zurückgelegten Wegstrecke etc.) wie auch z.B. bestimmte gespeicherte Werte zu löschen (z.B. die gemessene Höchstgeschwindigkeit) z.B. durch Drücken des Tasters für eine längere, vorbestimmte Zeit z.B. 4 Sekunden, oder das Umschalten eines Anzeigebereiches (z.B. Umschalten der Geschwindigkeitsanzeige von km/h zu mph) durch Drücken des Tasters für eine noch längere zeit, z.B. 15 Sekunden. Die Konstruktion mittels nur eines Tasters hat den Vorteil, dass die Herstellungskosten niedriger sein werden als die Konstruktion mit 2 oder mehreren Tastem.

Außerdem vorteilhaft sind in der Vorrichtung Filter vorgesehen die entstehende Vibrationen oder Stöße, die entstehen wenn die Vorrichtung auf einem Ski oder Snowboard befestigt ist, herausfiltern. Diese Filter können Hardwarefilterelemente oder durch die Software des zentralen Mikrocontrollers gelöste Filterstufen sein.

Außerdem vorteilhaft ist es bei der Winkelmessung sehr schnelle Winkeländerungen zu ignorieren, diese können insbesondere auftreten wenn der Skifahrer oder Snowboarder stürzt.

Außerdem vorteilhaft ist es die Vorrichtung auf dem Ski oder Snowboard mit Hilfe eines elastischen, schock- und vibrationsabsorbierenden Materials, z.B. Schaumstoff, einem doppelseitig klebenden Material, oder einem selbstklebenden **Klettverschluss** zu befestigen.

Außerdem vorteilhaft ist es anzunehmen die Zunahme des Luftdruckes zum sinkender der Höhe sei direkt proportional. In der Realität ist dies nicht der Fall, so herrscht z.B. auf NN (Normal Null) normalerweise ein Luftdruck von 1013 mbar, in 1000 Meter Höhe ein Luftdruck von 899 mbar, in 2000 Metern Höhe 795, in 3000 m 701, in 4000 m 616, sowie in 5000 Metern Höhe ein Luftdruck von 540 mbar. Da der Vorrichtung ohne Eichung nicht bekannt sein kann auf welcher Höhe sie sich befindet ist eine solche Annahme sinnvoll. Ferner sind für einen Skifahrer oder Snowboarder speziell die Höhen zwischen 1000m und 3000m interessant. deshalb vereinfacht es auch die vom zentralen Mikrocontroller durchzuführenden Berechnungen, wenn als Mittelwert angenommen wird, dass der Luftdruck mit 10,1m sinkender Höhe um 1 mbar steigt.

Außerdem vorteilhaft misst der Winkelmesser der Vorrichtung zusätzlich zum Winkel der der Hangneigung entspricht den Winkel den die Ski oder das Snowboard zu nach rechts oder nach links geneigt ist. Aus diesem Winkel kann dann eine eventuelle Kurvenfahrt des Skifahrers oder Snowboarders errechnet werden. Dies ist deshalb wichtig, da bei Kurvenfahrten die zurückgelegte Wegstrecke länger ist und damit die gemessene Geschwindigkeit höher ist. Dieser Messfehler kann durch die Miteinbeziehung der Seitenneigung kompensiert werden.

Alternativ oder zusätzlich können gefahrene Kurven z.B. auch durch eine entsprechende Beschleunigungs-Messung (insbesondere durch eine Messung der in "links-rechts-" Richtung wirkenden Beschleunigungen) ermittelt werden.

Außerdem vorteilhaft ist es eine abrupte hohe negative auf den Beschleunigungs-(Winkelsensor) wirkende Beschleunigung nicht als Winkeländerung zu interpretieren, da ein schnelles Abbremsen des Skifahrers oder Snowboarders dies auslösen könnte und dadurch zu Messfehlern führen würden.

Außerdem vorteilhaft ist es die Vorrichtung so zu konstruieren, dass verschiedene Betriebsmodi möglich bzw. auswählbar sind. Diese Betriebsmodi sind z.B. Anzeige der Geschwindigkeit, Anzeige der bisher maximal erreichten Geschwindigkeit, Anzeige der zurückgelegten Wegstrecke, Anzeige der am jeweiligen Tag insgesamt zurückgelegten Wegstrecke, Anzeige der insgesamt bisher zurückgelegten Wegstrecke, Anzeige der am jeweiligen Tag zurückgelegten Skiabfahrten, Anzeige der Anzahl der bisher insgesamt zurückgelegten Skiabfahrten, Temperaturanzeige.

Außerdem vorteilhaft ist es zurückgelegte Wegstrecken nur in die Berechnung mit einzubeziehen bzw. zu kumulieren, wenn es sich um Wegstrecken handelt, bei denen die Höhendifferenz aus einer fallende Höhe herrührt. Dies hat den Vorteil, dass nur Wegstrecken verwertet werden in den der Skifahrer oder Snowboarder den Hang hinunterfährt, und nicht solche in denen er sich (untätig) im Skilift befindet.

Außerdem vorteilhaft wird die Anzeige der (höchsten) Geschwindigkeit sowie der während der letzten Abfahrt zurückgelegten Distanz automatisch nach einem definiertem Höhenanstieg (z.B. 50m) automatisch auf 0 zurückgesetzt. Dies hat den Vorteil, dass diese Daten nicht manuell zurückgesetzt werden müssen.

Außerdem vorteilhaft wird die Anzeige der Geschwindigkeit sowie der während der letzten Abfahrt zurückgelegten Wegstrecke automatisch nach einem definierten Höhenanstieg (z.B. 50m) sowie nach dem Erkennen der nächsten (Hang abwärts) Geschwindigkeitsdaten auf "0" zurückgesetzt. Dies hat den Vorteil, dass der Skifahrer bzw. Snowboarder die Erfassten Daten im Skilift noch betrachten kann ohne dass diese gleich gelöscht werden.

Außerdem vorteilhaft wird die Anzeige der am jeweiligen Tag zurückgelegten Wegstrecke, sowie die Anzahl der am jeweiligen Tag zurückgelegten Skiabfahrten, automatisch zurückgesetzt wenn die Vorrichtung das nächste mal eingeschaltet wir (z.B. am nächsten Tag) und die nächsten (Hang abwärts) Geschwindigkeitsdaten erfasst werden. Dies hat den Vorteil, dass der Skifahrer oder Snowboarder die Vorrichtung (z.B. Abends) noch einmal einschalten kann um die Tagesdaten einzusehen ohne, dass diese dann gelöscht werden jedoch vor der nächsten Abfahrt die Daten automatisch auf "0" zurückgesetzt sind.

Außerdem vorteilhaft ist es die Vorrichtung so zu konstruieren, dass die Daten der insgesamt bisher zurückgelegten Wegstrecke, der bisher maximal erreichten Geschwindigkeit sowie der gesamten Anzahl der bisherigen Skiabfahrten durch Drücken des Auswahltasters bzw. Schalters von mehr als einer definierten Zeit (z.B. 3 Sekunden) automatisch auf "0" zurückzusetzen.

Außerdem vorteilhaft ist es die Vorrichtung so zu konstruieren, dass die Anzeige der Geschwindigkeit bzw. der zurückgelegten Wegstrecke durch noch längeres Drücken des Auswahltasters bzw. Schalters (z.B. 15 Sekunden) von der Anzeige in kmlh bzw. km in eine Anzeige von Meilen bzw. mph (Meilen/h) umgeschaltet wird, und/oder die Temperaturanzeige von der Anzeige in °C in eine Anzeige von °F.

Außerdem vorteilhaft ist es die Vorrichtung so zu konstruieren, dass die Vorrichtung durch einmaligen kurzen Druck auf den Auswaltaster bzw. Schalter eingeschaltet wird.

Außerdem vorteilhaft ist es die Vorrichtung so zu konstruieren, dass die Vorrichtung sich automatisch ausschaltet, wenn über eine vordefinierte Zeitspanne (z.B. 1 Stunde) keine Höhendifferenz gemessen wird.

Außerdem vorteilhaft ist es die Vorrichtung so zu konstruieren, dass nach dem Einschalten der Vorrichtung automatisch der Modus der Anzeige der Geschwindigkeit aktiviert ist.

Außerdem vorteilhaft ist es die Vorrichtung so zu konstruieren, dass nach jedem kurzen Drücken des Auswahltasters bzw. Schalters der Anzeigemodus gewechselt wird.
Z.B. Geschwindigkeits- Modus -> *«* kurzes *Drücken* » -> max. Geschwindigkeits-Modus -> *«* kurzes Drücken » -> Wegstrecken Modus -> « kurzes *Drücken* » -> heute zurückgelegte Wegstrecke -> *«* kurzes Drücken » -> gesamt zurückgelegte Wegstrecke -> *«* kurzes *Drücken* » -> Anzahl der heute zurückgelegten Abfahrten - > *«* kurzes *Drücken* » -> Anzahl gesamt zurückgelegte Abfahrten

Außerdem vorteilhaft ist es die Vorrichtung so zu konstruieren, dass zusätzlich die durchschnittliche während einer Abfahrt erzielte Geschwindigkeit angezeigt wird.

Außerdem vorteilhaft ist es die Vorrichtung so zu konstruieren, dass zusätzlich die Sinkgeschwindigkeit, während der Ski- oder Snowboardabfahrt bzw. Steiggeschwindigkeit, während der Benutzung des Skiliftes angezeigt wird.

Bevorzugt ist die Vorrichtung auf einem Ski oder Snowboard befestigt.

Besonders bevorzugt ist die Vorrichtung mit Hilfe eines elastischen, schockund/oder vibrationsabsorbierenden Materials auf dem Ski oder Snowboard befestigt.

Bevorzugt ist während der Auswertung in der Vorrichtung definiert, dass die Zunahme des Luftdruckes zum Sinken der Höhe direkt proportional ist.

Besonders bevorzugt misst der Winkelmesser der Vorrichtung zusätzlich zum Winkel der Hangneigung den Winkel den der Ski oder das Snowboard nach rechts oder nach links geneigt ist.

Bevorzugt wird eine abrupte hohe negative auf den Beschleunigungs-(Winkelsensor) wirkende Beschleunigung nicht als Winkeländerung interpretiert.

Besonders bevorzugt sind bei der Vorrichtung verschiedene Betriebsmodi möglich bzw. augwählbar, z.B. Anzeige der Geschwindigkeit, Anzeige der bisher maximal erreichten Geschwindigkeit, Anzeige der zurückgelegten Wegstrecke, Anzeige der am jeweiligen Tag insgesamt zurückgelegten Wegstrecke, Anzeige der insgesamt bisher zurückgelegten Wegstrecke, Anzeige der am jeweiligen Tag zurückgelegten Skiabfahrten, Anzeige der Anzahl der bisher insgesamt zurückgelegten Skiabfahrten, Temperaturanzeige.

Bevorzugt werden zurückgelegte Wegstrecken nur in die Berechnung mit einbezogen, wenn es sich um Wegstrecken handelt, bei denen die Höhendifferenz aus einer fallende Höhe herrührt.

Besonders bevorzugt wird die Anzeige der Geschwindigkeit sowie der während der letzten Abfahrt zurückgelegten Wegstrecke automatisch nach einem definierten Höhenanstieg (z.B. 50m) automatisch auf 0 zurückgesetzt.

Bevorzugt wird die Anzeige der Geschwindigkeit sowie die während der letzten Abfahrt zurückgelegte Wegstrecke automatisch nach einem definierten Höhenanstieg (z.B. 50m) sowie nach dem Erkennen der nächsten (Hang abwärts) Geschwindigkeitsdaten auf "0" zurückgesetzt.

Besonders bevorzugt wird die Anzeige der am jeweiligen Tag zurückgelegten Wegstrecke, und/oder die Anzahl der am jeweiligen Tag zurückgelegten Skiabfahrten, automatisch zurückgesetzt, wenn die Vorrichtung das nächste mal eingeschaltet wird (z.B. am nächsten Tag) und die nächsten (Hang abwärts) Geschwindigkeitsdaten erfasst werden.

Bevorzugt werden die Daten der insgesamt bisher zurückgelegten Wegstrecke, der bisher maximal erreichten Geschwindigkeit und/oder der gesamten Anzahl der bisherigen Skiabfahrten durch Drücken des Auswahltasters von mehr als einer definierten zeit (z.B. 3 Sekunden) automatisch auf "0" zurückgesetzt.

Besonders bevorzugt wird die Anzeige der Geschwindigkeit bzw. der zurückgelegten Wegstrecke durch noch längeres Drücken des Auswahltasters (z.B. 15 Sekunden) von der Anzeige in km/h bzw. km in eine Anzeige von Meilen bzw. mph (Meilenlh) umgeschaltet.

Bevorzugt wird die Vorrichtung durch einmaligen Kurzen Druck auf den Auswaltaster bzw. Schalter eingeschaltet.

Besonders bevorzugt schaltet die Vorrichtung sich automatisch aus, wenn über eine vordefinierte Zeitspanne (z.B. 1 Stunde) keine Höhendifferenz gemessen wird.

Bevorzugt ist nach dem Einschalten der Vorrichtung automatisch der Modus der Anzeige der Geschwindigkeit aktiviert.

Besonders bevorzugt wird nach jedem kurzen Drücken des Auswahltasters bzw. Schalters der Anzeigemodus gewechselt.

Bevorzugt wird zusätzlich die durchschnittliche während einer Abfahrt erzielte Geschwindigkeit angezeigt.

Besonders bevorzugt wird zusätzlich die Sinkgeschwindigkeit, während der Ski- oder Snowboardabfahrt bzw. Steiggeschwindigkeit, während der Benutzung des Skiliftes angezeigt.

Bevorzugt ist die Vorrichtung an einem Ski oder Snowboard befestigt, sowie auch eine - die ermittelten Daten (z.B. Wegstrecke und/oder Geschwindigkeit) anzeigende - Anzeigeeinrichtung (diese kann in die Vorrichtung integriert sein). Alternativ oder zusätzlich kann die Vorrichtung auch eine Sendeeinrichtung aufweisen, die die gemessenen und/oder ermittelten Daten an eine - entfernt von der Vorrichtung vorgesehene - Empfangseinrichtung sendet (z.B. mittels entsprechender Funksignale, z.B. bluetooth-, GSM-, oder UMTS-Signale, etc.).

Die Empfangseinrichtung ist mit einer Anzeigeeinrichtung gekoppelt, an der die von der Empfangseinrichtung empfangenen Daten dann angezeigt werden (ggf. nach vorheriger Auswertung der empfangenen Daten von einer mit der Empfangseinrichtung gekoppelten Auswerteeinrichtung). Die Empfangseinrichtung (und ggf. auch die Auswerteeinrichtung) kann z.B. in bzw. an einem Armband vorgesehen sein, oder z.B. an einer - entsprechend ähnlich wie herkömmliche Uhren, insbesondere Armbanduhren aufgebauten - Uhr, insbesondere Armbanduhr (als Anzeigeeinrichtung kann dann die an der Uhr bzw. Armbanduhr - sowieso standardmäßig - vorgesehene Anzeigeeinrichtung verwendet werden).

Alternativ kann die Funktion der Empfangseinrichtung und/oder der Anzeigeeinrichtung (und/oder der Auswerteeinrichtung) z.B. auch von einem Mobiltelefon erfüllt werden (welches die gemessenen und/oder ermittelten, und von der Vorrichtung ausgesendeten Daten empfängt, und - ggf. nach vorheriger Auswertung - dann anzeigt).

Vom Mobiltelefon aus können die Daten (oder ein - vordefinierter bzw. ausgewählter - Teil der Daten) an einen zentralen Rechner gesendet werden (z.B. die jeweils höchste, erzielte Geschwindigkeit). Die Daten können vom Mobiltelefon aus z.B. unter Verwendung entsprechender SMS-Datendienst-Protokolle gesendet werden, oder z.B. mittels entsprechender WAP-, GPRS-, oder sonstiger mobiler Datendienst-Protokolle. Am zentralen Rechner können - jeweils unterschiedlichen Benutzern zugeordnete - von unterschiedlichen Mobiltelefonen bzw. Vorrichtungen stammenden Daten gespeichert und/oder ausgewertet werden, insbesondere miteinander verglichen werden, so dass z.B. derjenige Benutzer ermittelt werden kann, der die höchste Geschwindigkeit erzielt hat (und/oder die zweithöchste Geschwindigkeit, etc.).

Die vom zentralen Rechner gespeicherten, insbesondere entsprechend ausgewerteten Daten können z.B. über das Internet abgerufen werden.

In die - z.B. an einem Ski oder einem Snowboard angebrachte - (Wegstrecken- bzw. Geschwindigkeitsmess-) Vorrichtung kann zusätzlich eine Diebstahl-Schutz-Einrichtung integriert sein. Wird diese aktiviert, wird der - sowieso - vorgesehene Beschleunigungssensor dazu verwendet, ein "unerlaubtes" (Weg-)Bewegen der Ski bzw. des Snowboards (bzw. eine entsprechende Bewegung der Vorrichtung) zu detektieren (bzw. - zur Fehlerkompensation - ein eine entsprechend lange Zeitdauer, z.B. mehrere Sekunden andauernde Bewegung). Wird eine entsprechende Bewegung detektiert, wird ein Alarm ausgelöst, z.B. ein entsprechendes optisches und/oder akustische Alarmsignal ausgesendet (und/oder ein entsprechendes Diebstahl-Melde-Signal an eine (bzw. die o.g.) - entfernt von der Vorrichtung angeordnete - Empfangseinrichtung sendet (z.B. ein bzw. das o.g. Mobiltelefon, eine bzw. die o.g. Armbanduhr, etc.), und dort ein "Alarm" ausgelöst (d.h. ein entsprechendes optisches und/oder akustische Alarmsignal ausgesendet).

Alternativ oder zusätzlich kann die - z.B. an einem Ski oder einem Snowboard angebrachte - (Wegstrecken- bzw. Geschwindigkeitsmess-) Vorrichtung auch die Funktion eines kontaktlosen (drahtlosen) Skipasses erfüllen (entsprechend ähnlich wie entsprechende, z.B. in speziellen Uhren z.B. der Firma Swatch®, oder z.B. in speziellen Handschuhen integrierte kontaktlose Skipässe.

Als Beschleunigungs- und/oder Drucksensor können in der Vorrichtung jeweils herkömmliche Beschleunigungs- und/oder Drucksensoren verwendet werden. Aus derartigen Sensoren kann i.A. (zusätzlich auch) die Umgebungstemperatur ausgelesen werden. Bevorzugt kann - als Zusatzfunktion - die (z.B. aus dem Beschleunigungs- oder dem Drucksensor (oder einem speziellen Sensor) ausgelesene) Umgebungstemperatur an der o.g. Anzeigeeinrichtung angezeigt werden (alternativ oder zusätzlich können während des Betriebs der Vorrichtung die jeweils minimalen und/oder maximalen Temperaturen in der Vorrichtung abgespeichert werden, und an der Anzeigeeinrichtung angezeigt werden).

Da der Beschleunigungssensor Beschleunigungen in sämtlichen Dimensions-Richtungen ermitteln kann (also auch in x- und in y-Richtung) können auch die von dem Ski bzw. Snowboard jeweils gefahrenen Kurven ermittelt werden. Dadurch ist es möglich, den kompletten Verlauf einer Ski- oder Snowboard-Abfahrt (mit Hangneigung, Kurven etc.) zu ermitteln und abzuspeichern. Die entsprechenden Daten können dann später (z.B. zu Hause) über eine entsprechende Schnittstelle (z.B. ein Kabel (USB), oder drahtlos (z.B. per Funk, Infrarot, etc.) an einen Rechner, z.B. PC übertragen werden. Dort können die entsprechenden Daten abgespeichert, und ausgewertet werden (z.B. kann an der dem jeweiligen Rechner zugeordneten Anzeigeeinrichtung die komplette Abfahrt mit Kurven etc. graphisch dargestellt werden, z.B. unter zusätzlicher Angabe von an entsprechenden Stellen, z.B. Kurven erreichten Geschwindigkeiten (denkbar ist z.B. auch eine "Nachstellung" der Abfahrt am PC mittels einer entsprechenden Spiele-Software)).

Da, wie oben erläutert, durch die Verwendung des Beschleunigungssensors jede Beschleunigung in sämtlichen Dimensionen (z.B. auch in (z.B. durch die Ski- oder Snowboard-Grundfläche definierte) x- sowie y-Richtung) mit hoher Genauigkeit gemessen werden kann, ist es möglich, die entsprechenden Daten in der Vorrichtung abzuspeichern, und diese Daten (später) - entsprechend wie oben beschrieben - auszulesen (und z.B. in einen Rechner, z.B. PC einzulesen), und zusammen mit anderen Daten (z.B. dem Gewicht des Skifahrers bzw. Snowboarders) die auf die Ski- bzw. Snowboard-Bindung wirkenden Kräfte zu berechnen (und darauf basierend eine sehr genaue und typgerechte Einstellung der entsprechenden Bindung vorzunehmen, z.B. - automatisch - mit Hilfe einer entsprechenden, die Werte der Bindungseinstellung berechnenden, auf dem Rechner geladenen Software).

Beispielsweise können in der Vorrichtung die entsprechenden Beschleunigungs- und/oder Höhenparameter-Werte für einen vorbestimmten Zeitraum, z.B. die letzen m Minuten bzw. s Stunden der letzten Abfahrt abgespeichert werden (jeweils gemessen nach vorabdefinierten, relativ kurzen Zeitintervallen (z.B. 0,1 sek)), und/oder die jeweils aufgetretenen Maximalwerte (z.B. bei einem Sturz oder in Kurven).

Auch denkbar ist (um nicht jeden Bindungshersteller mit einem
Auslesegerät ausstatten zu müssen) die Rohdaten aus dem Gerät durch den Anwender am heimischen PC auszulesen, und mittels eigener Software oder per Internet die persönliche Auswertung unter Berücksichtigung des Körpergewichts zu berechnen, und anschließend eine ausgedruckte Auswertung zum Einstellen der Bindung z.B. mit ins Sportgeschäft zu nehmen.

Zur Befestigung der Vorrichtung am Ski bzw. Snowboard kann z.B. eine - der entsprechenden Form der oberen Fläche des Skis oder Snowboards angepasst ausgestaltete - Halterung verwendet werden, oder z.B. eine - flexibel ausgestaltete (und deshalb bei verschiedenen Skis bzw. Snowboards verwendbare) - Halterung.

Die entsprechende Halterung kann z.B. U-förmig ausgestaltet, und z.B. aus Kunststoff ausgebildet sein, und - in liegender Form - an der oberen Fläche des Skis bzw. Snowboards befestigt sein; die Vorrichtung kann dann an der entsprechenden (U-förmigen) Halterung befestigt werden, z.B. von oben her in die Halterung eingeführt, und (mit Hilfe von entsprechend ähnlich wie bei herkömmlichen Kabelbindern ausgestalteten Verbindungsmitteln) - auf entsprechend variabel einstellbarer Höhe - eingerastet werden (und dann z.B. von dem linken bzw. rechten Abschnitt der U-förmigen Halterung gegen eine Bewegung nach links bzw. rechts hin gesichert sein (und/oder von dem hinteren bzw. vorderen Abschnitt gegen eine Bewegung nach hinten bzw. vorne hin)).

Die Geschwindigkeit kann - alternativ zur oben erläuterten Vorgehensweise - z.B. auch ausschließlich durch den Beschleunigungssensor gemessen werden (ohne dass mit Hilfe der gemessenen Beschleunigungswerte auf die oben erläuterte Weise der Winkel bestimmt wird). Die Geschwindigkeit kann dann jeweils durch entsprechende Integration der vom Beschleunigungssensor gemessenen Beschleunigungswerte ermittelt werden.

Vorteilhaft wird die o.g. Messung unter der Annahme durchgeführt, dass der jeweilige Druck und die jeweilige Höhe proportional zueinander sind (je größer die Höhe, desto niedriger der Druck, und desto kleiner die Höhe, desto höher der Druck (wobei die jeweils auftretenden Beträge des Druckunterschieds und des Höhenunterschieds proportional zueinander sind)). Alternativ kann die Höhe auch basierend auf einem anderen als einem linearen Zusammenhang gemessen bzw. ermittelt werden, z.B. mittels entsprechender, einen entsprechend anderen Zusammenhang zwischen Höhe und Druck widerspiegelnder Formeln oder Tabellen, auf deren Basis ebenfalls - nach entsprechender intervallweiser Messung des Drucks (bzw. des Druckunterschieds) - die entsprechende Höhendifferenz ermittelt werden kann.

Zur näheren Erläuterung der Erfindung werden im folgenden mehrere Ausführungsbeispiele beschrieben. Es zeigen:
**Figur 1** eine erfindungsgemäße Vorrichtung zum Messen der Geschwindigkeit bzw. Wegstrecke;
**Figur 2** eine Zuordnungstabelle für Winkel und Wegstrecke;

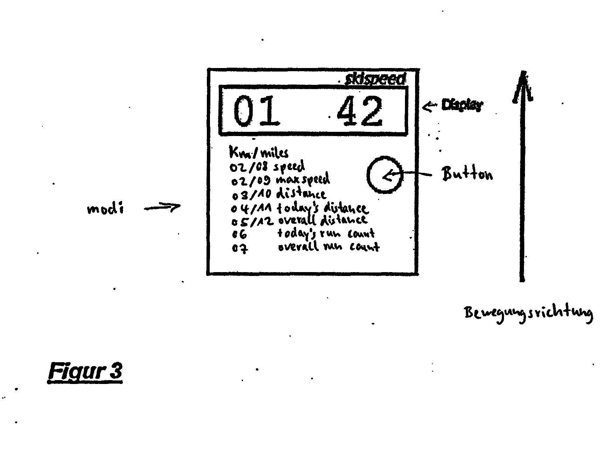

**Figur 3** eine Abbildung der Vorrichtung;
**Figur 1** stellt ein erstes Ausführungsbeispiel der Erfindung dar.

Block 1 symbolisiert den Drucksensor der den momentanen Umgebungsdruck misst und z.B. eine zum Umgebungsdruck proportionale Ausgangsspannung liefert. Diese Ausgangsspannung wird von Verstärker (2) verstärkt und einem analogen Eingang des Microcontrollers (5) zugeführt.

Block 4 symbolisiert den Neigungssensor, der die aktuelle Neigung der Vorrichtung misst. Ist die Vorrichtung fest auf dem Ski oder Snowboard befestigt, entspricht die Neigung der Vorrichtung der Neigung des Hanges, auf dem sich der Ski oder das Snowboard befindet. Der Neigungssensor besteht vorzugsweise aus einem preisgünstigen Beschleunigungssensor, der sowohl dynamische (z.B. Vibration) wie auch statische Beschleunigungen (z.B. Gravitation) messen kann. In diesem Fall misst der Sensor die statische Beschleunigung der Gravitation, die bei einem Winkel von 90° zur Erdoberfläche am größten, genau 9,81 m/s² ist. Mit kleinerem Winkel sinkt auch die auf den Sensor wirkende Beschleunigung. Der Neigungssensor überträgt den gemessenen Wert direkt an den mit diesem verbundenen Microcontroller (5). Damit kann der Microcontroller die jeweils gemessene Neigung in "°" errechnen.

Der Microcontroller wird über die angeschlossenen Batterien, vorzugsweise kleiner Knopfzellen mit Strom versorgt. Zusätzlich ist an den Microcontroller (5) ein Taster (6) angeschlossen über den die Vorrichtung vom Benutzer gesteuert werden kann. Zusätzlich ist an den Microcontroller (5) eine Anzeigevorrichtung (3) z.B. ein LCD-Display angeschlossen, über welches die gemessenen Daten ausgegeben werden können.

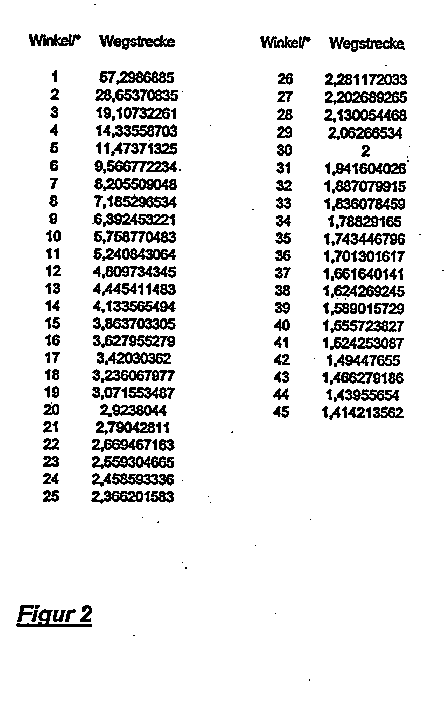

Der Microcontroller (5) löst nach vordefinierten zeitlichen Intervallen Messungen aus, z.B. jede Sekunde (entsprechend einer von einer Zeit-Meßeinrichtung bereitgestellten Zeit-Meßdaten); dabei wird jeweils sowohl die Neigung wie auch die der aktuelle Druck gemessen bzw. errechnet. Fährt der Skifahrer oder Snowboarder z.B. einen Hang mit einem Gefälle (Neigung) von 20° hinunter, wird dieser Wert an den Microcontroller (5) übertragen. Zusätzlich wird der aktuelle Druck, durch den Drucksensor (1) gemessen und mit im letzten Intervall gemessenen Druck verglichen, hieraus kann die zurückgelegte Höhendifferenz berechnet werden. Der Luftdruck steigt in Höhen zwischen 1000 Metern und 3000 Metern um durchschnittlich 1mbar bei verringern der Höhe um 10,1 m. Dieser Mittelwert ist im Microcontroller (5) fest einprogrammiert. Misst der Microcontroller also z.B. eine Druckdifferenz von +1mbar zwischen zwei Intervallen, ergibt sich daraus eine zurückgelegte Höhendifferenz von 10,1 m bzw. ein Sinken um 10,1 Höhenmetern. In einer im Microcontroller (5) gespeicherten Umrechnungstabelle, in der die zu einem jeweiligen Winkel zwischen 1° und 45° gehörige Wegstrecke bei einer Höhendifferenz von 1 m angegeben ist, kann nun die zum Winkel von 20° sowie der Höhendifferenz von 1 Meter entsprechende in dieser Zeit (1 Sekunde) zurückgelegte Wegstrecke ausgelesen werden. Ein Beispiel für eine solche Zuordnungstabelle ist in Figur 2 dargestellt. Für einen Winkel von 20° würde eine Wegstrecke von 2,920 Metern für eine Höhendifferenz von 1m ausgelesen.

Dieser Wert wird nun mit der gemessenen Höhendifferenz von 10,1m multipliziert und ergibt damit (einen Schätzwert für) die vom Skifahrer oder Snowboarder zurückgelegte Wegstrecke innerhalb des 1 Sekunden Intervalls, in diesem Fall 29,490 m, also eine (geschätzte) Geschwindigkeit von 29,490 m/s. Nach Multiplikation dieses Wertes mit 3,6 kann direkt die momentane Geschwindigkeit an der Anzeigevorrichtung (3) ausgegeben werden, in diesem Fall 106, 16 km/h.

## Patentansprüche

1. Wegstrecken- und/oder Geschwindigkeitsmessvorrichtung, insbesondere zur Befestigung an einem Ski oder Snowboard, **dadurch gekennzeichnet, dass** die Wegstrecke durch die Messung von Gefälle sowie Höhendifferenz ermittelt wird, wobei die Höhendifferenz durch einen elektronischen Luftdrucksensor gemessen wird.

2. Vorrichtung nach Anspruch 1, **dadurch gekennzeichnet, dass** das Gefälle durch einen elektronischen Winkelsensor gemessen wird.

3. Vorrichtung nach einem der vorherigen Ansprüche, **dadurch gekennzeichnet, dass** die Winkelmessung durch einen Beschleunigungssensor der sowohl statische Beschleunigung wie auch dynamische Beschleunigung messen kann, durchgeführt wird.

4. Vorrichtung nach einem der vorherigen Ansprüche, **dadurch gekennzeichnet, dass** die Vorrichtung mehrere Beziehungen zwischen Winkel (Gefälle des Hanges) und Höhendifferenz abgespeichert hat.

5. Vorrichtung nach einem der vorherigen Ansprüche, **dadurch gekennzeichnet, dass** die Vorrichtung mittels einer Batterie, insbesondere mittels einer preisgünstigen Knopfzelle betrieben wird.

6. Vorrichtung nach einem der vorherigen Ansprüche, **dadurch gekennzeichnet, dass** die Vorrichtung so konstruiert ist, dass sie mittels nur eines Tasters/Knopfes bzw. Schalters zu bedienen ist.

7. Vorrichtung nach einem der vorherigen Ansprüche, **dadurch gekennzeichnet, dass** in der Vorrichtung Filter vorgesehen sind, die entstehende Vibrationen oder Stöße herausfiltern.

8. Vorrichtung nach einem der vorherigen Ansprüche, **dadurch gekennzeichnet, dass** die Vorrichtung auf einem Ski oder Snowboard befestigt ist.

9. Vorrichtung nach Anspruch 8, welche mit Hilfe eines elastischen, schockund/oder vibrationsabsorbierenden Materials befestigt ist.

10. Vorrichtung, insbesondere nach einem der vorhergehenden Ansprüche, zur Befestigung an einem Ski oder Snowboard zur Messung der vom Ski oder Snowboard zurückgelegten Wegstrecke, und/oder der vom Ski oder Snowboard erzielten Geschwindigkeit, **dadurch gekennzeichnet, dass** zur Messung der Wegstrecke und/oder der Geschwindigkeit ein Beschleunigungssensor verwendet wird.
